# FASCICULE DE BREVET EUROPEEN

(11) **EP 1 717 020 B1**
(45) Date de publication et mention de la délivrance du brevet: **27.02.2008**
(21) Numéro de dépôt: 06300376.8
(22) Date de dépôt: 19.04.2006
(51) Int. Cl.: B32B 15/20, H01B 1/02, C25D 7/06, H01B 13/00, H01B 13/22, C25D 5/44, B21C 37/04

(54) **Câble avec conducteur central en aluminium**
Kabel mit Innenleiter aus Aluminium
Cable with aluminum central conductor

(30) Priorité: 25.04.2005 FR 0551055
(43) Date de publication de la demande: 02.11.2006
(73) Titulaire: Nexans Société Anonyme, 75008 Paris (FR)
(72) Inventeur: Bruzek, Christian-Eric, 59141, Thun St. Martin (FR); Brismalein, Christophe, 62800, Lievin (FR); Carpentier, Pascal, 02300, Chauny (FR)
(74) Mandataire: Lenne, Laurence

(56) Documents cités:
- WO-A-94/13866
- FR-A- 2 194 528
- GB-A- 1 315 215
- US-A- 2 075 332
- US-A- 3 867 265
- US-A- 5 704 993

## Description

La présente invention a pour objet un procédé de fabrication d'un câble composé d'un assemblage de fils sensiblement identiques, le conducteur central de chaque fil étant en aluminium. L'invention a également pour objet le câble résultant de la mise en oeuvre du procédé. Ce câble, avantageusement utilisé dans le domaine de l'aéronautique, présente une durée de vie et des caractéristiques mécaniques améliorées par rapport aux câbles de l'art antérieur.

Principalement pour une question de gain de poids, les câbles à conducteur central en cuivre, métal très bon conducteur de l'électricité, sont souvent remplacés par des câbles avec un conducteur central en aluminium recouvert d'une couche de cuivre, laquelle représente environ 15% du diamètre du câble, l'aluminium représentant ainsi environ 85% du diamètre du câble.

Les modes de réalisation classiques du conducteur central en aluminium recouvert de cuivre sont la technique de soudage à froid en continu de fils machine aluminium recouverts de feuillard de cuivre (technique désignée par procédé "Kabelmétal") et la technique de presse hydrostatique à froid. Afin d'éviter l'oxydation du cuivre lors de l'isolation du câble, une fine couche de nickel d'environ un µm est habituellement déposée sur la couche de cuivre. Les câbles en aluminium présentent cependant des inconvénients d'ordre mécanique et d'ordre électrique.

Une première difficulté provient du fait que les propriétés mécaniques après vieillissement en température d'un câble en aluminium recouvert de cuivre sont moins bonnes que celles du conducteur seul en aluminium ou en cuivre, notamment en terme de possibilité d'allongement et de pliage. La diminution de la possibilité d'allongement et de pliage a été constatée par les auteurs de la présente invention sur les câbles en aluminium cuivré, notamment après les dernières opérations de fabrication et de vieillissement en température sur une longue durée.

Une deuxième difficulté provient de la diminution de la durée de vie du conducteur central en aluminium résultant de la dégradation de ses propriétés électriques. On a en effet constaté que la résistivité électrique du câble augmente au cours du temps, jusqu'à atteindre des valeurs non acceptables. Un phénomène semblable a été décrit dans le brevet US 5 704 993 pour des câbles avec un conducteur central (mais qui n'est pas en aluminium) recouvert d'une couche métallique. Selon un premier mode de réalisation, le conducteur central est en acier au carbone et la couche métallique est en cuivre, nickel, argent ou or. Selon un deuxième mode de réalisation, le conducteur central est en cuivre et la couche métallique est en acier au carbone. Une fine couche de niobium, vanadium ou tantale a été interposée entre le conducteur central et la couche métallique. Cette fine couche sert de barrière de diffusion, empêchant la diffusion du cuivre dans l'acier au carbone. Cependant, il est indiqué dans ce brevet US qu'une tentative de réalisation d'un conducteur composé d'aluminium et d'acier au carbone a échouée.

La demande de brevet WO 94/13866 A concerne un procédé de fabrication d'un câble électrique constitué d'une âme centrale en aluminium, d'une sous-couche de cuivre et d'une couche d'étain. Le but est d'améliorer la brasabilité du fil d'aluminium aux soudures en alliage d'étain.

Le brevet US 2.075.332 concerne de façon générale un appareil pour déposer par électrolyse une couche d'un métal sur un fil métallique. Ce brevet ne concerne pas les conducteurs en aluminium.

Le brevet US 3.867.265 décrit un procédé pour déposer par électrolyse une couche de nickel, cuivre, étain, zinc ou cadmium sur un conducteur en aluminium ou à base d'aluminium. Ce document ne mentionne cependant pas le dépôt d'une couche intermédiaire.

Aucun des documents mentionnés précédemment ne décrit une structure de câble telle que proposée par la présente invention.

La présente invention propose de remédier à ces deux inconvénients que sont la dégradation des propriétés mécaniques et la diminution de la durée de vie d'un câble composé d'un assemblage de fils, chacun d'eux étant constitué d'un conducteur central en aluminium recouvert d'une couche de cuivre.

De façon plus précise, la présente invention propose un procédé de fabrication d'un câble composé d'un assemblage de fils, chaque fil comprenant un conducteur central en aluminium recouvert d'une couche de cuivre, ledit procédé permettant d'améliorer les caractéristiques mécaniques, notamment d'allongement et de pliage, du câble et d'augmenter sa durée de vie. Le procédé consiste à interposer une couche intermédiaire métallique de nickel, niobium, tantale ou vanadium entre le conducteur central et la couche de cuivre.

Afin d'éviter l'oxydation du cuivre lors de l'isolation du câble, une fine couche de nickel d'environ un µm est habituellement déposée sur la couche de cuivre.

Les techniques utilisées pour la fabrication du conducteur peuvent être les suivantes : technique d'électrodéposition, technique de recouvrement ou de soudage en continu de feuillard ou d'un tube, technique de presse hydrostatique ou extrusion à froid ou à chaud de feuillard ou d'un tube ou compression isostatique à chaud. Il est possible d'utiliser indifféremment deux techniques parmi celles-ci pour réaliser les fils : une technique servant à déposer la couche métallique intermédiaire et l'autre technique servant à déposer la couche de cuivre. Il est aussi possible d'utiliser la même technique pour déposer les deux couches.

La section de la couche métallique intermédiaire en nickel, niobium, tantale ou vanadium est avantageusement comprise entre 0,01 et 5 % de la section totale du fil. Cette limite supérieure de 5% n'est pas une limite technique mais économique, une augmentation d'épaisseur provoquant une augmentation du coût de fabrication.

La section de la couche de cuivre de chaque fil est avantageusement comprise entre 10 et 30% de la section totale du fil.

Selon le mode de réalisation préféré, un fil machine constituant le conducteur est étiré à froid ou tréfilé afin d'obtenir ledit câble.

Une couche supplémentaire de nickel est avantageusement déposée sur la couche de cuivre afin d'éviter l'oxydation du cuivre.

D'autres avantages et caractéristiques de l'invention apparaîtront au cours de la description qui suit de plusieurs modes de réalisation de l'invention, donnés à titre d'exemples non limitatifs.

Selon les méthodes classiques de l'art antérieur, la fabrication d'un câble en aluminium s'effectue, selon une première méthode, à partir de fils machine, sensiblement identiques, en aluminium recouvert par deux feuillards en cuivre, l'ensemble étant soudé en continu pour former des fils en aluminium cuivré. La liaison métallique entre le cuivre et l'aluminium est assurée par laminage et tréfilage de l'ensemble. Selon une autre méthode, une barre en aluminium cuivré est obtenue à partir d'un tube de cuivre entourant une barre d'aluminium. La réduction de section est réalisée sous presse hydraulique, ce qui permet une bonne liaison métallique entre le cuivre et l'aluminium. Les fils d'aluminium cuivré ainsi obtenus sont ensuite recuits pendant environ 2 heures à 200°C, puis assemblés pour former un câble, lequel est isolé à l'aide d'une gaine en matière plastique isolante telle que le PTFE (polytétrafluoroéthylène) et chauffé à environ 370°C pendant 10 minutes. Les inventeurs ont constaté une dégradation des caractéristiques mécaniques de l'aluminium cuivré, notamment au pliage et à l'allongement à la traction. Pour les câbles de l'art antérieur, l'allongement à la rupture après isolation a une valeur de l'ordre de 3%. L'allongement à la rupture est défini comme le pourcentage d'allongement à la traction que peut subir le câble sans se rompre. Selon l'invention, cette dégradation ne se produit pas, ou de façon atténuée, lorsqu'une fine couche métallique intermédiaire de nickel, de niobium, de tantale ou de vanadium est interposée entre l'aluminium et le cuivre. Dans ce cas, les inventeurs ont obtenu des valeurs d'allongement supérieures à 8%, pouvant aller au-delà de 10%. Le câble est donc plus résistant à la traction et au pliage et, de ce fait, sa durée de vie est augmentée.

La mise en oeuvre du procédé de fabrication selon l'invention peut prendre plusieurs formes.

Selon un mode de mise en oeuvre, la fabrication d'un câble en aluminium s'effectue à partir d'un fil en aluminium recouvert de nickel par électrodéposition en continu puis recouvert de cuivre par électrodéposition en continu. Une couche de nickel anti-oxydation est déposée par électrodéposition sur la couche de cuivre. Puis on procède au tréfilage pour aboutir à un fil de diamètre par exemple voisin de 0,2 mm.

Selon un autre mode de mise en oeuvre, on part d'une barre cylindrique en aluminium, par exemple de diamètre compris entre environ 40 et 60 mm et de longueur comprise entre 1 et 5 mètres. Une couche de nickel, par exemple d'environ 20 µm, est déposée sur la surface cylindrique de la barre d'aluminium de préférence par nickelage électrolytique, par opposition au nickelage chimique pour lequel la vitesse de dépôt de nickel est plus lente. La barre d'aluminium ainsi nickelée est placée dans un tube de cuivre de même longueur que la barre d'aluminium, le diamètre intérieur du tube étant très légèrement supérieur au diamètre de la barre d'aluminium. Quant à l'épaisseur du tube en cuivre, elle est avantageusement choisie de sorte qu'en section le cuivre représente environ 15% par rapport à la section de l'aluminium. Dans l'exemple choisi précédemment d'une barre en aluminium de diamètre 40 mm, l'épaisseur du tube de cuivre est d'environ 1,6 mm.

L'ensemble formé de la barre en aluminium nickelée entourée du tube en cuivre est ensuite étiré à froid avec recuits intermédiaires jusqu'à obtenir un diamètre extérieur du tube en cuivre d'environ 8 mm puis tréfilé et recuit jusqu'à un diamètre de 1,8mm environ. Une couche de nickel est ensuite déposée sur le cuivre de façon à éviter son oxydation. Ensuite, ce diamètre de 1,8 mm est réduit jusqu'à atteindre environ 0,2 mm par tréfilage.

Selon un autre mode de mise en oeuvre du procédé, le niobium remplace le nickel entre l'aluminium et le cuivre. Des feuilles de niobium, par exemple d'épaisseur comprise entre 25 et 400 µm, recouvrent la barre d'aluminium par exemple de diamètre 50mm et de longueur 1 à 5m de façon à complètement l'envelopper. Ces feuilles peuvent être soudées à la barre d'aluminium. Un tube de cuivre est comme précédemment placé autour de la barre d'aluminium entourée de niobium et ensuite soumis à un étirement à froid. Puis l'ensemble est tréfilé jusqu'à un diamètre 1,8mm. Une couche de nickel anti-oxydation est déposée par électrodéposition sur le tube de cuivre ainsi étiré. Puis on procède au tréfilage pour aboutir à un fil de diamètre voisin de 0,2 mm.

Selon un autre mode de mise en oeuvre, l'opération d'étirement est remplacée par une opération d'extrusion de l'ensemble formé de la barre d'aluminium entourée de la couche intermédiaire de nickel, de niobium, de tantale ou de vanadium et placée dans un tube en cuivre. A titre d'exemple, le diamètre de la barre d'aluminium peut être de 500 mm, l'épaisseur de la couche intermédiaire peut être de 0,6 mm et le tube de cuivre peut avoir une épaisseur de 20 mm. Par extrusion on obtient un fil d'environ 8 mm de diamètre que l'on réduit à un diamètre intermédiaire pour déposer une fine couche de nickel par électrodéposition puis par tréfilage le fil est réduit à environ 0,2 mm. L'extrusion peut avoir lieu à froid, en plusieurs opérations successives, mais dans ce cas la filière doit pouvoir opérer à des pressions très élevées. Il est alors souvent préférable de procéder à chaud en une seule opération, ce qui permet de travailler à des pressions d'extrusion moins élevées.

Le câble ainsi formé par câblage avec un assemblage de fils est isolé à l'aide d'une gaine plastique et chauffé à environ 370°C pendant 10 minutes. Des mesures d'allongement et de pliage effectuées après ces dernières opérations ont montrées une amélioration par rapport à des câbles identiques en aluminium cuivré mais sans couche intermédiaire de nickel, de niobium, de tantale ou de vanadium. Comme indiqué précédemment, on a obtenu des valeurs d'allongement supérieures à 8% pour des câbles d'aluminium fabriqués selon la présente invention, comparées à des valeurs de l'ordre de 3% pour des câbles classiques sans cette couche intermédiaire.

Outre les avantages de conservation des caractéristiques d'allongement et de pliage de l'aluminium recouvert de niobium, de nickel, de tantale ou de vanadium, les caractéristiques électriques du câble, notamment sa conductivité, sont améliorées après vieillissement en température. La fine couche intermédiaire agit comme une barrière de diffusion qui empêche la diffusion du cuivre vers l'aluminium et inversement de l'aluminium vers le cuivre. On évite ainsi la formation d'une couche d'aluminium mélangé à du cuivre située entre le conducteur d'aluminium et la couche de cuivre. Cette couche de mélange aluminium/cuivre est à l'origine de la dégradation des caractéristiques électriques, notamment de la conductivité, des câbles en aluminium. Grâce à la couche intermédiaire interposée entre l'aluminium et le cuivre, la durée de vie du câble s'en trouve allongée.

Un autre avantage de l'invention réside dans le fait que les fils peuvent être tréfilés après le dépôt des différentes couches.

## Revendications

1. Procédé de fabrication d'un câble constitué d'un assemblage de fils, chacun d'eux comprenant un conducteur central en aluminium recouvert d'une couche de cuivre, ledit procédé permettant d'améliorer les caractéristiques mécaniques, notamment d'allongement et de pliage, du câble et d'augmenter sa durée de vie, **caractérisé en ce qu**'il consiste à interposer une couche intermédiaire entre ledit conducteur central et ladite couche de cuivre, ladite couche intermédiaire étant réalisée en un métal choisi parmi le nickel, le niobium, le tantale ou le vanadium.

2. Procédé selon la revendication 1 **caractérisé en ce que** ladite couche intermédiaire de nickel est déposée par nickelage électrolytique.

3. Procédé selon la revendication 2 **caractérisé en ce que** la section de la couche intermédiaire de nickel de chaque fil est comprise entre 0,01 et 5 % de la section totale du fil.

4. Procédé selon la revendication 1 **caractérisé en ce que** la couche de cuivre est déposée par cuivrage électrolytique.

5. Procédé selon la revendication 4 **caractérisé en ce que** la section de la couche de cuivre de chaque fil est comprise entre 10 et 30% de la section totale du fil.

6. Procédé selon la revendication 1 **caractérisé en ce que** la couche intermédiaire de niobium, de tantale ou de vanadium est réalisée par enveloppement de feuillards de niobium, de tantale ou de vanadium autour du conducteur central en aluminium.

7. Procédé selon la revendication 6 **caractérisé en ce que** la section de la couche intermédiaire de niobium, de tantale ou de vanadium de chaque fil a une épaisseur comprise entre 0,01 et 5 % de la section totale du fil.

8. Procédé selon l'une des revendications précédentes **caractérisé en ce que** ladite couche intermédiaire est déposée sur une barre d'aluminium.

9. Procédé selon la revendication 8 **caractérisé en ce que** ladite barre d'aluminium recouverte de ladite couche intermédiaire est soudée en continu, puis étirée à froid, puis tréfilé afin d'obtenir ledit câble.

10. Procédé selon la revendication 8 **caractérisé en ce que** ladite barre d'aluminium recouverte de ladite couche intermédiaire est placée dans un tube en cuivre de diamètre interne légèrement supérieur au diamètre de la barre d'aluminium.

11. Procédé selon la revendication 10 **caractérisé en ce que** l'ensemble formé de la barre d'aluminium recouverte de ladite couche intermédiaire et placée dans le tube en cuivre est tout d'abord étiré à froid, puis tréfilé afin d'obtenir ledit câble.

12. Procédé selon la revendication 10 **caractérisé en ce que** l'ensemble formé de la barre d'aluminium recouverte de ladite couche intermédiaire et placée dans le tube de cuivre est tout d'abord extrudé à froid ou à chaud, puis tréfilé afin d'obtenir ledit câble.

13. Procédé selon l'une des revendications précédentes **caractérisé en ce qu**'une couche supplémentaire de nickel est déposée sur ladite couche de cuivre afin d'éviter l'oxydation du cuivre.

14. Câble en aluminium présentant des caractéristiques mécaniques, notamment d'allongement et de pliage, et une durée de vie améliorées, **caractérisé en ce qu**'il est fabriqué selon le procédé défini à l'une des revendications précédentes.

## Claims

1. A method for making a cable consisting of an assembly of wires, each of them comprising a central aluminum conductor covered with a copper layer, said method allowing improvement of the mechanical, notably extension and folding, characteristics of the cable and increase of its lifetime, **characterized in that** it consists of interposing an intermediate layer between said central conductor and said copper layer, said intermediate layer being made in a metal selected from nickel, niobium, tantalum, or vanadium.

2. The method according to claim 1, **characterized in that** said intermediate nickel layer is deposited by nickel electro-plating.

3. The method according to claim 2, **characterized in that** the section of the intermediate nickel layer of each wire is between 0.01 and 5% of the total section of the wire.

4. The method according to claim 1, **characterized in that** the section of the copper layer is deposited by copper electro-plating.

5. The method according to claim 4, **characterized in that** the section of the copper layer of each wire is between 10 and 30% of the total section of the wire.

6. The method according to claim 1, **characterized in that** the intermediate niobium, tantalum or vanadium layer is made by wrapping niobium, tantalum or vanadium foils around the central aluminum conductor.

7. The method according to claim 6, **characterized in that** the section of the intermediate niobium, tantalum or vanadium layer of each wire has a thickness between 0.01 and 5% of the total section of the wire.

8. The method according to any of the preceding claims, **characterized in that** said intermediate layer is deposited on an aluminum bar.

9. The method according to claim 8, **characterized in that** said aluminum bar covered with said intermediate layer is welded continuously and then cold-drawn, in order to obtain said cable.

10. The method according to claim 8, **characterized in that** said aluminum bar covered with said intermediate layer is placed in a copper tube with an inner diameter slightly larger than the diameter of the aluminum bar.

11. The method according to claim 10, **characterized in that** the assembly formed of the aluminum bar covered with said intermediate layer and placed in the copper tube is first of all cold-drawn and then wire-drawn in order to obtain said cable.

12. The method according to claim 10 **characterized in that** the assembly formed of the aluminum bar covered with said intermediate layer and placed in the copper tube is first of all cold- or hot-extruded and then wire-drawn in order to obtain said cable.

13. The method according to any of the preceding claims, **characterized in that** an additional nickel layer is deposited on said copper layer in order to prevent oxidation of the copper.

14. An aluminum cable having improved mechanical, notably extension and folding characteristics, and lifetime, **characterized in that** it is made according to the method defined according to any of the preceding claims.

## Patentansprüche

1. Verfahren zur Herstellung eines Kabels, das aus einem Drahtverbund besteht, wobei jedes einen zentralen, mit einer Kupferschicht beschichteten Leiter aus Aluminium umfasst, wobei das Verfahren eine Verbesserung der mechanischen Eigenschaften, vor allem der Längung und der Biegung, des Kabels erlaubt und die Verlängerung seiner Lebensdauer, **dadurch gekennzeichnet, dass** es darin besteht, eine Zwischenschicht zwischen den zentralen Leiter und der Kupferschicht anzubringen, wobei die Zwischenschicht aus einem Metall gefertigt ist, das aus dem Nickel, dem Niobium, dem Tantal oder dem Vanadium ausgewählt ist.

2. Verfahren nach Anspruch 1, **dadurch gekennzeichnet, dass** die Nickel-Zwischenschicht durch galvanische Vernickelung aufgebracht ist.

3. Verfahren nach Anspruch 2, **dadurch gekennzeichnet, dass** der Durchmesser der Nickel-Zwischenschicht jedes Drahts zwischen inklusive 0,01 und 5 % des Durchmessers insgesamt des Drahts beträgt.

4. Verfahren nach Anspruch 1, **dadurch gekennzeichnet, dass** die Kupferschicht durch galvanische Verkupferung aufgebracht ist.

5. Verfahren nach Anspruch 4, **dadurch gekennzeichnet, dass** der Durchmesser der Kupferschicht jedes Drahts zwischen inklusive 10 und 30 % des Durchmessers insgesamt des Drahts beträgt.

6. Verfahren nach Anspruch 1, **dadurch gekennzeichnet, dass** die Niobium-, Tantal- oder Vanadium-Zwischenschicht durch Umwickelung des zentralen Aluminiumleiters mit Niobium-, Tantal- oder Vanadiumbändern durchgeführt wird.

7. Verfahren nach Anspruch 6, **dadurch gekennzeichnet, dass** der Durchmesser der Niobium-, Tantal- oder Vanadium-Zwischenschicht jedes Drahts eine Dicke zwischen inklusive 0,01 und 5 % des Durchmessers insgesamt des Drahts hat.

8. Verfahren nach einem der vorangehenden Ansprüche, **dadurch gekennzeichnet, dass** die Zwischenschicht auf einen Aluminiumstab aufgebracht wird.

9. Verfahren nach Anspruch 8, **dadurch gekennzeichnet, dass** der mit der Zwischenschicht bedeckte Aluminiumstab durchlaufgeschweißt wird, danach kalt gereckt und danach gezogen, um das Kabel herzustellen.

10. Verfahren nach Anspruch 8, **dadurch gekennzeichnet, dass** der mit der Zwischenschicht bedeckte Aluminiumstab in eine Kupferrohr mit einem Innendurchmesser platziert wird, der etwas größer ist als der Durchmesser des Aluminiumstabs.

11. Verfahren nach Anspruch 10, **dadurch gekennzeichnet, dass** die Baugruppe, die von dem mit der Zwischenschicht bedeckten und in das Kupferrohr platzierten Aluminiumstab gebildet wird, zunächst kalt gereckt und danach gezogen wird, um das Kabel herzustellen.

12. Verfahren nach Anspruch 10, **dadurch gekennzeichnet, dass** die Baugruppe, die von dem mit der Zwischenschicht bedeckten und in das Kupferrohr platzierten Aluminiumstab gebildet wird, zunächst kalt oder warm extrudiert, danach gereckt und danach gezogen wird, um das Kabel herzustellen.

13. Verfahren nach einem der vorangehenden Ansprüche, **dadurch gekennzeichnet, dass** auf die Kupferschicht eine zusätzliche Nickelschicht aufgebracht wird, um die Oxidation des Kupfers zu verhindern.

14. Aluminiumkabel, das verbesserte mechanische Eigenschaften, vor allem im Hinblick auf Längung und Biegung, und eine längere Lebensdauer aufweist, **dadurch gekennzeichnet, dass** es gemäß dem Verfahren hergestellt wird, das in einem der vorangehenden Ansprüche beschrieben ist.
